# EUROPEAN PATENT SPECIFICATION

(11) **EP 3 066 847 B1**
(45) Date of publication and mention of the grant of the patent: **17.04.2019**
(21) Application number: 14783850.2
(22) Date of filing: 13.10.2014
(51) Int. Cl.: H04W 4/00, H04W 48/18

(54) **RADIO DEVICE AND PROCESS FOR MULTI-DOMAIN MONITORING AND ACCESS MANAGEMENT**
FUNKEINRICHTUNG UND VERFAHREN ZUR MEHR-DOMÄNEN ÜBERWACHUNG UND ZUGRIFFSMANAGEMENT
DISPOSITIF RADIO ET PROCÉDÉ DE GESTION D'ACCÈS ET DE SURVEILLANCE MULTI-DOMAINES

(30) Priority: 05.11.2013 EP 13191511
(43) Date of publication of application: 14.09.2016
(73) Proprietor: Gemalto M2M GmbH, 81541 München (DE)
(72) Inventor: BREUER, Volker, 16727 Boetzow (DE); WEHMEIER, Lars, 14612 Falkensee (DE)
(74) Representative: Grevin, Emmanuel
(86) International application number: PCT/EP2014/071876
(87) International publication number: WO 2015/067437

(56) References cited:
- EP-A2- 2 268 090
- EP-A2- 2 384 061
- WO-A1-2011/041913
- WO-A1-2012/160201
- US-A1- 2011 117 909

## Description

The present invention relates to a radio device for requesting and receiving a radio network service from at least one cellular radio network. It also relates to a method for operating a radio device and to a computer-readable medium.

Radio devices operating in a cellular radio network are known to be configured to be prepared for the common tasks of mobile devices: receive phone calls, originate phone calls, send or receive data, e.g., SMS or packet-based data in particular by means of TCP-IP traffic from or to a remote server. In order to do so, a radio device needs to be equipped with subscription data, which are stored on a subscriber identity module (SIM). Those subscription data have to comprise all configuration information that allows the radio device to perform all the required services.

On the other hand, a new type of application devices provides machine-type radio communication. For a subset of devices equipped with access to cellular radio networks the machine-type communication is required for relatively rare and not time-critical data transmissions only. For such application devices special "data-only" subscriptions are provided by mobile operators, which typically are subscriptions at much lower cost due to the reduced usage of the cellular radio networks.

The problem with the known scenarios is, that there is a growing need for such machine type communication application devices which in their normal course of operation execute only rarely mobile-originated data transfer, e.g., power meters which once a week or even once a month send the measurements to an allocated central server, but in some situations require other types of communication, in particular for handling incoming data transfer such as firmware updates or configuration changes.

US 2012/0135715 A1 describes a dual SIM terminal and an operating method thereof for supporting a dual standby and single-talk operation of the terminal device using a single baseband. The device checks whether a requested service is available in a currently used SIM. Upon determining that the service is not available in the currently used SIM, a SIM switching is performed, followed by performing the requested service using the second SIM. A user is enabled to select a SIM for performing a requested service upon determining that the network associated with the currently selected SIM is currently not in a state to provide the requested service.

According to a first aspect of the present invention, a radio device for requesting and receiving a radio network service from at least one cellular radio network is provided. The radio device comprises:
a) a multi-domain subscription unit, which is configured to provide at its output respective subscription information enabling access to a requested radio network domain from a set of radio network domains defined by a multi-domain service subscription, wherein each radio network domain comprises a cellular network infrastructure with a plurality of network cells in the same geographical area;
b) a multi-domain access-control unit, which is connected with the multi-domain subscription unit and configured to obtain the respective subscription information and to obtain access, using the respective subscription information, and maintain access to not more than one of the radio network domains at a given time, for requesting and receiving a requested radio network service; and
c) a multi-domain monitoring unit, which is configured to determine, while access to a first one of the radio network domains is maintained, first availability information regarding the requested radio network service from the first radio network domain and second availability information regarding the requested radio network service from at least one second radio network domain of the set of radio network domains, and provide at its output, at least upon determination that the first availability information indicates non-availability of the requested radio network service from the first radio network domain, an availability output indicative at least of those second radio network domains with determined current availability of the requested radio network service.

The first radio network domain is according to the present invention reserved for machine-to-machine radio network services only.

Radio network domains in the context of the present specification each comprise a cellular network infrastructure with a plurality of network cells in the same geographical area, and thus are potentially available at the same time and location to the radio device for providing radio network services, governed by a given multi-domain service subscription. A single cellular radio network thus can comprise two or more radio network domains, and at least two of the radio network domains are accessible in one or more of the cells of the cellular radio network. As such, a radio network domain provides an individual set of configurations, which may influence the behaviour of the radio devices operating within the radio network domain of the cellular radio network, e.g. with access intervals, etc., but also with respect to charging airtime.

Radio network services provided to the radio device include any radio transmission directed to the radio device (mobile-terminated MT) and any radio transmission directed from the radio device to wireless network nodes and usually subsequentially to a target device (mobile-originated MO). In some embodiments, the radio network services comprise radio transmissions of payload data. In particular embodiments, the radio network services comprise a radio transmission of coded speech. Certain radio network services allow a delay in the transmission, other radio network services require a real-time interaction between the radio device as one endpoint of a communication and at least one target device as another endpoint of a communication. Some radio network services allow a rather high maximum error rate in the transmission of payload data, while others require a very low maximum error rate.

The multi-domain access-control unit of the radio device is configured to maintain access to not more than one radio network domain at any given time, in many application cases specifically only one radio network domain at any given time. That is, for changing from a first radio network domain to a second radio network domain, it is required to terminate a given access to the first radio network domain, and obtain access to the second radio network domain using respective subscription information. This operation is controlled by the multi-domain access-control unit of the radio device. The radio device is thus advantageously configured for operation in a radio network environment that differentiates between different levels of service quality by providing a set of access-restricted radio network domains providing such different levels of quality for different types of applications controlling operation of radio devices and forming different application contexts with different requirements regarding the level of service quality.

The radio device of the present invention allows a particularly flexible operation in such a multi-domain environment. In operation, the radio device enables data traffic created by the radio device to be served with a desired service quality level at any given time by using access to a respective one of a set of radio network domains. The radio device is capable of flexibly and dynamically selecting a desired service quality in accordance with given current requirements, which may for instance be requirements of an application controlling the operation of the radio device. Depending on such requirements at a given point in time, an application may allow data traffic to and from the radio device to be served with an unknown, in particular unpredictable delay, and, at another point in time, require data traffic to be served with a defined high level of service quality, such as without delay. The flexibility of the radio device in navigating within such multi-domain radio network environments is enabled by the particular capability of the multi-domain monitoring unit of the radio device to monitor the multi-domain environment of radio network domains covered by the given multi-domain service subscription even while having access to a given domain of a set of radio network domains. This way, if any change occurs, be it in the requirements of the service quality level or be it in the service quality level actually delivered by the currently selected radio network domain, the radio device is capable of immediately adapting any changing to another radio network domain providing the requested level of service quality based on the information provided by the multi-domain monitoring unit. This way, the radio device is always informed about the current conditions of any of the radio network domain. For instance, a radio network domain broadcasts about its domain capabilities, available level of service quality, or it may temporally provide a blocking indication, a rejection of registration request, or a call barring.

One advantage of the inventive solution is that it is based on the current situation of the radio network domain, that is if a radio device could perform a certain service, in particular a momentary service with the current subscription to a radio network domain, no switch is required while in other situations - with a lot of traffic on that domain - the service cannot be successfully be executed, and in effect the inventive radio device detects this situation and makes the switch to a radio network domain which is capable to fulfil this service.

In the following, embodiments of the radio device of the first aspect of the invention will be described. Additional embodiments comprise a combination of additional features of at least two of the embodiments described in the following.

In some embodiments, the multi-domain monitoring unit is configured to perform its monitoring task in an asynchronous manner. For instance, the multi-domain monitoring unit is configured to perform a monitoring operation regularly after a predefined time interval has lapsed. In another embodiment, the multi-domain monitoring unit is additionally or alternatively configured to perform the monitoring operation upon detecting an inability of the currently used radio network domain to provide a requested level of service quality.

In one embodiment, the multi-domain access-control unit is configured to determine a request quality of service level, hereinafter QoS level, associated with the requested radio network service. The multi-domain monitoring unit is configured to determine the availability information from a respective network domain in association with the respective QoS level and to generate from the second availability information, upon determination that the first availability information indicates non-availability of the requested radio network service from the first radio network domain, an output indicative of those second radio network domains with determined current availability of radio network services of the request QoS level or a QoS level higher than the request service-class. The QoS level can be composed of one or more of the following parameters:
- Allowed delay of traffic
- Amount of data to be down/uploaded in certain time period
- Technology, in particular with technology depending data throughput rates and latency times
- Service type (voice, SMS, IP, ...)
- Frequency of monitoring for other domains.

By an appropriate composition of the used QoS level a fine tuning of the radio device behaviour with respect to radio network domains is possible, and it can be streamlined for certain type of devices. It is further advantageous to define profiles that can be activated for a certain use case and reduce configuration efforts on device side.

In one form of this embodiment, the requested radio network service comprises time-critical service operations to be provided either without delay or with a determined maximum amount of delay in providing the time-critical service operations. Thus, the multi-domain monitoring unit is configured to determine whether the requested QoS, i.e. in this form: provision of momentary traffic, is currently available from the different radio network domains covered by the multi-domain subscription.

In some embodiments, upon determining non-availability of the requested radio network service from the first radio network domain, the multi-domain access-control unit is additionally configured to stop any communication with the first radio network domain and switch to obtaining and maintaining access to the second radio network domain. Thus, certain situations will lead to a switching from the default access to the first domain to an access to the second domain. In preferred embodiments, the multi-domain access-control unit is configured to by default obtain and maintain access to the first radio network domain.

To restore the default access with the first radio network domain, in one variant of this embodiment, the multi-domain access-control unit is further configured to determine, while maintaining access to the second radio network domain, an availability of the requested radio network service from the first radio network domain, and, upon determination that the availability information indicates availability of the radio network services from the first radio network domain, instruct the multi-domain access-control unit to re-access the first radio network domain.

By this embodiment it is ensured that the multi-domain access-control unit of the radio device is aware of the availability situation in both accessible radio network domains for requested types of radio network services and can therefore select - when a radio network service is to be accessed - the appropriate and available radio network domain for effecting the radio network service.

A preferred application case of this type of embodiments provides that the radio device is by default registered in a first radio network domain that fulfils predefined criteria. One exemplary criterion is the provision of a predetermined lowest acceptable QoS level. In a preferred application case, the radio device is dedicated to perform machine-to-machine (M2M) communication, and the first radio network access domain is a dedicated M2M domain, which provides a QoS level specifically designed to serve service requests of M2M radio devices. As is known per se, machine-to-machine communication is employed for instance in the fields of logistics, medical technology, fleet management, car safety, telematics, and metering, such as metering of power consumption.

In preferred embodiments, the subscription information comprises at least one subscription identifier. The multi-domain subscription unit of such embodiments is configured to maintain a one-to-one assignment between, on one hand, the radio network domains in the set of radio network domains defined by the service subscription, and, on the other hand, respective subscription identifiers.

The subscription information preferably further comprises at least one subscriber identification information for identifying and authenticating a subscriber when requesting access to a radio network domain. The number of different subscriber identification information is in different variants of such embodiments between (and including) one and the number of subscription identifiers. Thus, in some variants, while there is an individual subscription identifier for each radio network domain, different radio network domains may be allocated to the same subscriber identification information. In one of these variants, only one subscriber information is maintained for all different subscription identifiers. In other words, all radio network domains can be accessed by the radio device using the same subscriber identification information. However, in other variants, there is respective individual subscriber identification information allocated to each radio network domain, i.e., subscription identifier, meaning that for every radio network domain different subscriber identification information has to be provided.

These embodiments enable one variant, in which the multi-domain access-control unit is configured to use first subscriber identification information allocated to the radio device for attaching to the first network domain and to use second subscriber identification information, which differs from the first subscriber identification information and is also allocated to the radio device, for attaching to the second network domain. In this case, different radio network domains are combined with different identities.

Identities are in one embodiment stored in one physical entity, such as a subscriber identification device according to any known standard of cellular radio communication (SIM, USIM, UICC, MIM etc.). The multi-domain access control unit is configured to access at least one memory in at least one subscriber identification device, which is communicatively connectable or connected to the radio device.

In another embodiment, the subscriber identification device is configured to accommodate at least two subscriber identity modules, in particular, a first subscriber identity module, which stores first subscriber identification information, and a second subscriber identity module, which stores second first subscriber identification information. The multi-domain access-control unit is additionally configured to read the respective first or second subscriber identification information from the first or the second subscriber identity module.

Preferred embodiments of the radio device have a control interface, such as an AT interface or a Java interface, for providing a communicative connection with an external application device. The multi-domain monitoring unit is in these embodiments configured to provide, via the control interface, the first and second availability information as the availability output. And the multi-domain access-control unit is configured to receive via the control interface the following:
a) a request for the radio network service; and
b) access-control information indicative of that second radio network domain selected for obtaining access to, for requesting the radio network service.

The multi-domain access-control unit is further configured to obtain access to the selected second radio network domain upon receiving the access-control information. This embodiment enables an application process to make a decision to change the radio network domain based on the radio device informing the application process about any events making the change necessary by virtue of the monitoring results. In doing so the application process, which is the one who is able to know which type of communication is about to be executed, knows about the availability of radio network domains and its capabilities to perform required radio network services and can therefore control the handling of communication tasks.

In an embodiment forming an alternative to that, the multi-domain monitoring unit is configured to provide the first and second availability information as the availability output to the multi-domain access-control unit, and the multi-domain access-control unit is configured to select, in response to receiving the availability output, and obtain access to the selected one of the second radio network domains for serving the requested radio network service. In this case, the radio device is enabled to make a decision on the radio network domain to be used without input via the application control interface.

The radio device of the embodiments described hereinabove finds advantageous application in many configurations that involve an operation of the radio device in accordance with an integrated application program that is loaded to a program memory of the radio device and run by a processor of the radio device.

However, other embodiments of the radio device are configured to be controlled in their operation by an external application device. As described hereinabove in the context of an embodiment of the radio device of such embodiments of the first aspect of the invention, in order to allow control by an external application device, the radio device has a control interface for providing a communicative connection with the external application device. The multi-domain monitoring unit of the radio device is in such embodiments configured to provide, via the control interface, the first and second availability information as the availability output. The multi-domain access-control unit of the radio device of these embodiments is configured to receive via the control interface at least one of the following: a request for the radio network service; and access-control information indicative of that second radio network domain selected for obtaining access to, for requesting the radio network service; the multi-domain access-control unit is further configured to obtain access to the selected second radio network domain upon receiving the access-control information.

Accordingly, a second aspect of the present invention concerns an application device that is suitable for interacting with such embodiments of the radio device of the first aspect of the present invention. The application device of this second aspect of the invention comprises
- an application control interface for communicative connection of the external radio device via its control interface;
- an application unit configured to generate and communicate a request for a radio network service to the external radio device via the application control interface; and
- a radio-service control unit, which is configured to receive from the radio device via the control interface the availability output indicative of whether or not the requested radio network service is available from the first radio network domain, to which the radio device currently maintains access, and from at least one second radio network domain, to output via the control interface to the external radio device access-control information indicative of the target network domain for providing the requested radio network service, wherein the first radio network domain is reserved for machine-to-machine radio network services only.

A third aspect of the present aspect is formed by a method for operating a radio device. The method comprises
- operating the radio device under a multi-domain service subscription enabling access to a requested radio network domain from a set of radio network domains, wherein each radio network domain comprises a cellular network infrastructure with a plurality of network cells in the same geographical area;
- obtaining access, using respective subscription information from the multi-domain service subscription, and maintaining access to not more than one of the radio network domains at a given time, for requesting and receiving a requested radio network service;
- determining, while access to a first one of the radio network domains is maintained, first availability information regarding the requested radio network service from the first radio network domain, and second availability information regarding the requested radio network service from at least one second radio network domain of the set of radio network domains, and
- at least upon determination that the first availability information indicates non-availability of the requested radio network service from the first radio network domain, providing an availability output indicative at least of those second radio network domains with determined current availability of the requested radio network service, wherein the first radio network domain is reserved for machine-to-machine radio network services only.

The method of the third aspect of the invention shares the advantages explained in the context of the description of the radio device of the first aspect of the invention. Reference is therefore made to the above description. Embodiments of the method of the second aspect of the invention include operating the radio device in accordance with any additional functionality or any combination of additional functionalities provided by the embodiments of the radio device, which are described in the present specification and in the claims.

One such embodiment further comprises
- by default obtaining and maintaining access to the first radio network domain,
while maintaining access to the second radio network domain, determining availability of the requested radio network service from the first radio network domain; and,
upon determination that the first availability information indicates availability of the radio network services from the first radio network domain, re-accessing the first radio network domain.

Another embodiment of the method of the third aspect of the invention that is particularly suited for operation in communicative connection with an external application device according to the second aspect of the invention further comprises
- receiving, via a control interface, a request for the radio network service from an external application device;
- providing, via the control interface, the first and second availability information as the availability output to the external application device; and
- receiving, via the control interface, access-control information indicative of that second radio network domain selected for obtaining access to, for requesting the radio network service; and
- obtaining access to the selected second radio network domain upon receiving the access-control information.

A further embodiment of the method comprises
- internally providing the first and second availability information as the availability output, and
- internally selecting, in response to receiving the availability output, and obtaining access to the selected one of the second radio network domains for serving the requested radio network service.

A fourth aspect of the present invention is formed by a computer-readable medium containing a set of instructions that causes a processor of a radio device to perform a method according to the third aspect of the invention or one of its embodiments.

Further embodiments will be described in the following with reference to the enclosed drawings. In the drawings:
Fig. 1 is a schematic block diagram of an embodiment of a radio device;
Fig. 2 is a schematic block diagram of an arrangement of a radio device and an application device; and
Fig. 3 is a flow diagram illustrating embodiments of a method for operating a radio device in accordance with the present invention.

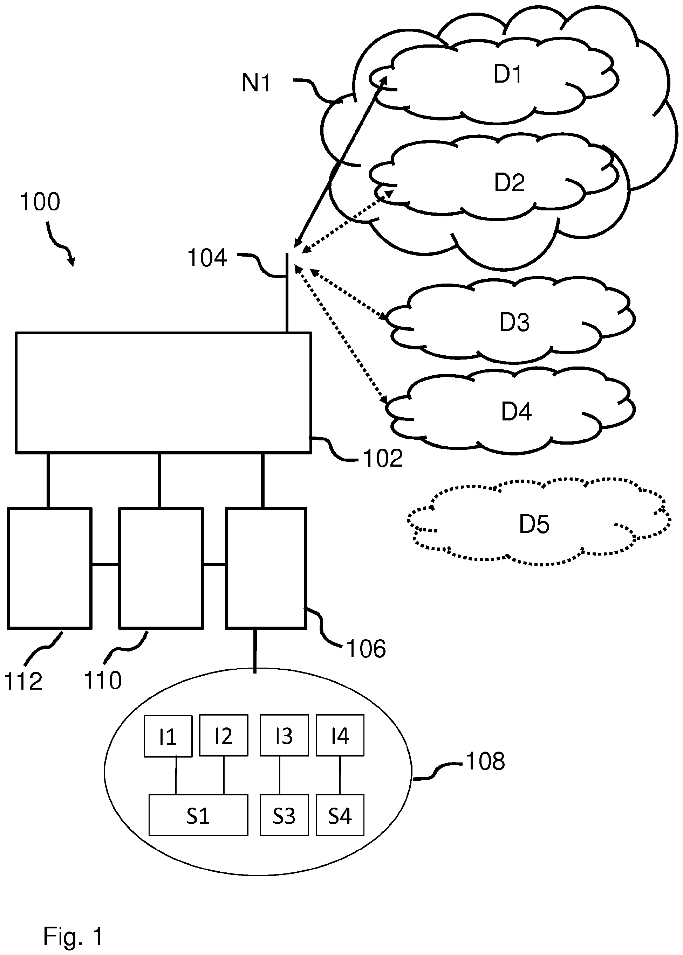

Fig. 1 is a schematic block diagram of an embodiment of a radio device 100. The radio device 100 is configured for radio communication with one or more radio access networks for requesting and receiving a radio network service. Radio communication is effected by a radio-frequency part 102, which is connected with an antenna 104. The antenna 104 shown in Fig. 1 is to be understood as graphically representing any suitable antenna arrangement, which may comprise more than just one antenna. The radio-frequency part 102 is configured to generate and transform baseband signals into radio frequency signals for transmission via the antenna 104, in accordance with one or more radio telecommunication standards for communication of speech or other data, which are well known in the art. Nonlimiting examples of standards suitable for use by the radio device 100 are generally referred to as second, third orfourth generation standards (2G, 3G, 4G). The radio-frequency part 102 is also configured to receive via the antenna 104 and convert received radio-frequency signals into baseband signals, based on the same standard or standards.

The radio-frequency part 102 is connected with a multi-domain subscription unit 106. The multi-domain subscription unit is configured to provide at its output respective subscription information enabling access to a requested radio network domain from a set of radio network domains D1 to D4. The radio network domains D1 to D4 are covered by a multi-domain service subscription that is assumed to be activated for the radio device 100 for the purpose of the present description. In contrast, a further domain D5 is not covered by the multi-domain service subscription, and is shown with a dotted outline for that reason. The multi-domain subscription thus allows the radio device 100 to select and access any one of the radio network domains D1 to D4, but not the radio network domain D5, for obtaining a requested radio network service. Application scenarios involving different ways of selection of the radio network domain to be accessed will be described further below.

In the following, for the sake of brevity, the term "domain" will be used in parallel to the term "radio network domain" and with the same meaning. Each of the domains D1 to D4 comprises a respective cellular network infrastructure with a plurality of network cells in the same geographical area. The cells of any of the domains can additionally belong to any other of the domains. Domains D1 and D2 are part of the cellular wireless network N1 operated by one provider, and as such represent network N1 with a special set of parameters and/or access rights for radio devices that are subscribed to one or both of the domains.

The domains D1 to D4, from the perspective of a user of the radio device 100, thus form alternatives to each other for obtaining a radio network service. The number of four domains D1 to D4 is used only by way of example for the present embodiment. The number of domains covered by a multi-domain service subscription may be any number equal or larger than 2.

Access to any of the domains D1 to D4 requires the provision of respective subscription information. According to the given multi-domain service subscription, the multi-domain subscription unit 10 has access to the required sets of subscription information for all domains covered by the multi-domain subscription. The subscription information is stored in a memory 108. The memory 108 comprises one or more memory devices, depending on the particular implementation. For some implementations, the subscription information for different domains is stored in different memory devices. For instance, the different memory devices may be comprised by different subscriber identification devices. In other implementations, the subscription information for at least two of the domains covered by the multi-domain subscription is stored in a single memory device. For ease of description, the following description of the structure of the subscription information will focus on this embodiment. However, the same structure can be realized in embodiments employing more than one memory device for storing the subscription information.

The multi-domain subscription unit 106 maintains a one-to-one assignment between, on one hand, the radio network domains D1 to D4 in the set of radio network domains defined by the service subscription, and, on the other hand, respective subscription identifiers 11 to 14. For each of the subscription identifiers, there is an allocation of respective subscriber identification information to be used for accessing the respective radio network domain. The subscriber information is shown under reference labels S1 to S3. Generally, the number of different subscriber identification information is between, and including, one and the number of subscription identifiers. In the present example, the domains D1 and D2, which are allocated to the subscription identifiers 11 and 12, can be accessed using the same subscriber identification information S1. This may for instance be the case where a first provider operates the two domains D1 and D2, whereas different second and third providers operate the domains D3 and D4.

The radio device 100 further has a multi-domain access-control unit 110. It is connected with the radio-frequency part 102 and with the multi-domain subscription unit 106 and configured to request and obtain required subscription information from the multi-domain subscription unit 106 and to control the process of requesting, using the respective subscription information, obtaining, and maintaining access to the requested one of the domains covered by the multi-domain subscription. The multi-domain access control unit 110 is further configured to maintain access to not more than one of the radio network domains D1 to D4 at a given time, for requesting and receiving a requested radio network service. This is graphically represented in Fig. 1 by a full double-arrow extending between the antenna 104 of the radio device 100 and the domain D1. Dotted double-arrows extending between the antenna 104 and the domains D2 to D4 indicate that the radio device does not have direct access to these domains while maintaining access to the domain D1.

The radio device 100 further has a multi-domain monitoring unit 112, which is connected with the radio-frequency part 102 and the multi-domain access-control unit 110. The multi-domain monitoring unit 112 is configured to determine, while access to a given one of the radio network domains - by way of example: D1- is maintained, (first) availability information regarding the requested radio network service from the given radio network domain D1 and additional (second) availability information regarding the requested radio network service from at least one of the domains D1 to D4 covered by the multi-domain subscription.

To this end, the multi-domain monitoring unit 112 evaluates information provided by the domains D1 to D4, for instance via broadcast channels. The information maintained by the multi-domain monitoring unit 112 may for instance comprise one or more of the following: cellular access technology (3G only, HSUPA, HSDPA, HSPA+ LTE, etc), availability (yes or no) of requested quality level of service (QoS class), data throughput, latency time (RTT round trip time), signal strength (RSSI for GSM, CPICH_RSCP for UMTS, RSRP strength for LTE) or signal quality (CPICH_Ec/io or RSRQ for LTE). One of the domains can exclusively support a certain technology, e.g., LTE. Besides the above named signal strength, quality or latency parameters it can be any value being representative for a certain radio capability or even being combined from single parameters to a certain set, i.e. QoS.

The multi-domain monitoring unit 112 provides at its output to the multi-domain access control unit 110, for instance upon determination of non-availability of a currently requested radio network service from the current radio network domain D1, an availability output indicative at least of those of the radio network domains D2 to D4 with determined current availability of the radio network service that is requested or is to be requested.

Thus, depending for example on a network load, the domain D1 or access to this domain may be blocked. If a service that is currently requested or is scheduled to be requested in the near future is not allowed or supported by the current domain D1, the multi-domain access control unit 110 of the radio device 100 can take actions based on the monitoring of the other domains D2 to D4 in order to obtain the service (to be) requested. In particular, the radio device 100 may change its registered domain to access one of the domains D2 to D4, which is suitable for the desired service.

In one implementation, the multi-domain access-control unit 110 is configured to obtain and maintain access to a first domain as a default domain, for instance the radio network domain D1. This can for instance be implemented by adding a corresponding default-domain information element to the subscription information. It is sufficient to provide the default-domain information element in the subscription information for the domain D1, the information element indicating that this is the default domain for the radio device 100. As an alternative, a default-information element is provided in the subscription information for every domain. In the present example, for the domains D2 to D4 this information element would have a complementary value indicating that these domains are not the default domain for the radio device 100. In this implementation, after the radio device 100, by means of the multi-domain access-control unit, has performed a change from the default domain D1 to one of the domains D2 to D4, and while maintaining access to that second radio network domain, the multi-domain monitoring unit 112 continues determining the availability of the requested radio network service not only from the domain D2 (and, optionally, D3 and D4), but also from the default domain D1. Upon determination that the determined availability information indicates availability of the radio network services from the first radio network domain D1, the multi-domain access-control unit 112 re-accesses the first radio network domain D1.

The default domain of one preferred application case is reserved for machine-to-machine (M2M) radio network services only. In one exemplary application scenario, the default M2M domain is a domain to be used by smart metering radio devices for communication of measured data to a metering server. In exceptional situations, however, for instance involving construction or maintenance, communication via a different domain providing encrypted data communication may be required but not provided by the default M2M domain.

Further, the default domain D1 could be configured to generally support radio network services, in particular those which are momentary. Due to the limited priority of domain D1 within the network N1 it can, however, happen that the respective radio network service cannot be handled without unacceptable time-delay in domain D1. Now when the multi-domain access-control unit 110 is aware about the fact that domain D2 is able of executing respective radio network service without time-delay due to the higher priority - and of course connection fees - it will force a switch to domain D2 for executing the radio network service. Should it turn out in the meantime that domain D1 is now capable again, or that another radio network service is requested which can be well executed within domain D1, this is detected by the multi-domain monitoring unit 112 and a switch back to domain D1 is requested.

The radio device 100 can be implemented in different ways. In one implementation, the different functional units described, that is, the radio-frequency part, the multi-domain subscription unit, the multi-domain access-control unit, and the multi-domain monitoring unit are provided in the form of individual hardware components, such as integrated circuits, application-specific integrated circuits, microcontrollers or processors. However, the functional differentiation between the units described above need not be implemented correspondingly in a differentiation between different hardware components of a radio device. Furthermore, at least some of the hardware may be integrated in a single hardware component, such as in a processor, a system-on-chip or in a system-in-package. As an alternative, different hardware components can be provided on a circuit board. The multi-domain subscription unit, the multi-domain access-control unit, and the multi-domain monitoring unit are in one embodiment provided in integrated form as parts of a baseband processor of the radio device. As such, the functionality of at least one of these components is in one embodiment implemented in the form of software or firmware to be executed by a processor of the radio device 100, for instance a baseband processor. Access capability to different domains may be implemented by providing separate units, each unit being configured for providing access to at least one of the different domains covered by the multi-domain subscription. As an alternative, a single unit provides the capability to access all domains covered by the multi-domain subscription.

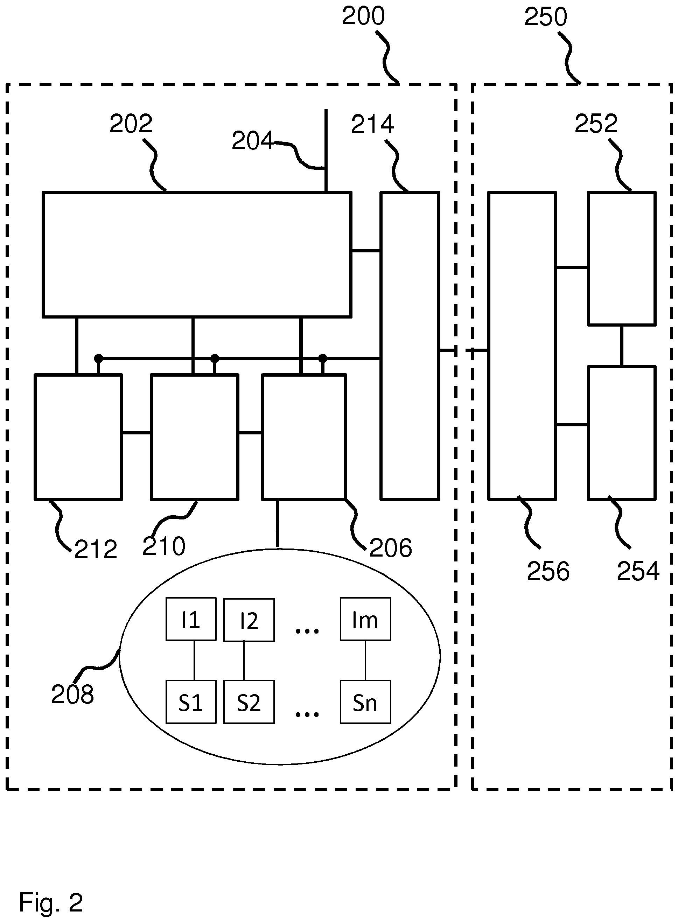

Fig. 2 is a schematic block diagram of an arrangement of a radio device 200 and an application device 250. The application device 250 is connectable to the radio device 200. As such, the application device 250 may be disconnected from the radio device 200. In an alternative embodiment, the application device 200 and 250 are connected by a connection that is permanent in the view of a user. The radio device may for instance be comprised in a casing of the application device.

The radio device 200 is similar to the radio device 100 described in the context of Fig. 1. Functional units having a correspondence in the embodiment of Fig. 1 are in Fig. 2 shown under a reference label having the same last two digits as those used in Fig. 1, and differ only in the first digit being a "2" instead of a "1". For a description of their structure and functionality, reference is made to the above description in the context of Fig. 1. The following description will focus on the differences of the radio device 200 in comparison with the radio device 100 of Fig. 1.

The radio device 200 additionally has a control interface 214, which is configured to provide a communicative connection between the radio device 200 and the external application device 250. The control interface 214 is in one embodiment an AT interface and serves for an exchange of payload and control information between the radio device 200 and the application device 250 by means of a command set named Hayes commands, AT commands or AT style commands. ETSI GSM 07.05 (3GPP TS 27.005) / 3GPP TS 27.007 specify exemplary AT style command sets for radio devices compatible with the GSM (2G) / UMTS (3G) standard. In another embodiment, the control interface 214 is a Java interface. The control interface 214 is internally connected with the radio-frequency part 202, the multi-domain subscription unit 206, the multi-domain access-control unit 210, and with the multi-domain monitoring unit 212.

The multi-domain monitoring unit 212 uses the control interface 214 to provide to the application device 250 the generated availability output indicative of whether or not a radio network service (to be) requested is available from the current radio network domain D1, to which the radio device currently maintains access, and from the other radio network domains D2 to D4 covered by the multi-domain service subscription.

The multi-domain access-control unit 210 is additionally configured in this embodiment to receive, via the control interface 214, a request for the radio network service; and access-control information indicative of that second radio network domain selected for obtaining access to, for requesting the radio network service. In response, the multi-domain access-control unit 210 is configured to obtain access to the selected radio network domain upon receiving the access-control information. In other words, control over the domain to be selected is performed by the application device 250, and the selection is communicated to the radio device via the control interface 214 and then executed under internal control by the multi-domain access control unit 210.

As a further difference in comparison with the embodiment of Fig. 1, the memory 208 storing subscription information is organized in a different manner in the present embodiment. In the present embodiment, there is a one-to-one allocation between subscription identifiers 11 to 14 and subscriber identification information S1 to S4. As for the embodiment Fig. 1, it is assumed that the radio device operates with a multi-domain subscription covering four domains D1 to D4 (not shown in Fig. 2). It is noted that this alternative structure of allocation is merely shown here to provide another example. There is no correlation between the structure of subscription information and the provision of the control interface 214.

The application device 250 comprises an application unit 252, a radio-service control unit 254 and an application control interface 256. The application unit 252 is configured to generate and communicate a request for a radio network service to the external radio device 200 via the application control interface 256. The application unit implements core functions of the application device. For instance, in an example of the application device forming a metering device, the application unit controls operation of a sensor, receives sensor signals and generates measuring data to be transmitted to a server by the radio device 200. The application unit provides a corresponding command to the radio device 200 that is communicated via the application control interface 256 of the application device 250 and the control interface 214 of the radio device 200.

The radio-service control unit 254 is configured to receive from the radio device 200 via the control interface the availability output, which indicates whether or not the currently requested radio network service is available, not only from the radio network domain D1, to which the radio device currently maintains access, but also from at least one second of the radio network domains D2 to D4. The radio-service control is further configured to select a suitable domain, based on the current requirements regarding radio network services determined with a view to the needs of the application unit 252 and based on the availability output received from the radio device 200. Furthermore, the radio-service control unit 254 is configured to output, via the application control interface 256, access-control information to the external radio device 200. The access-control information is indicative of the selected network domain for providing the requested radio network service.

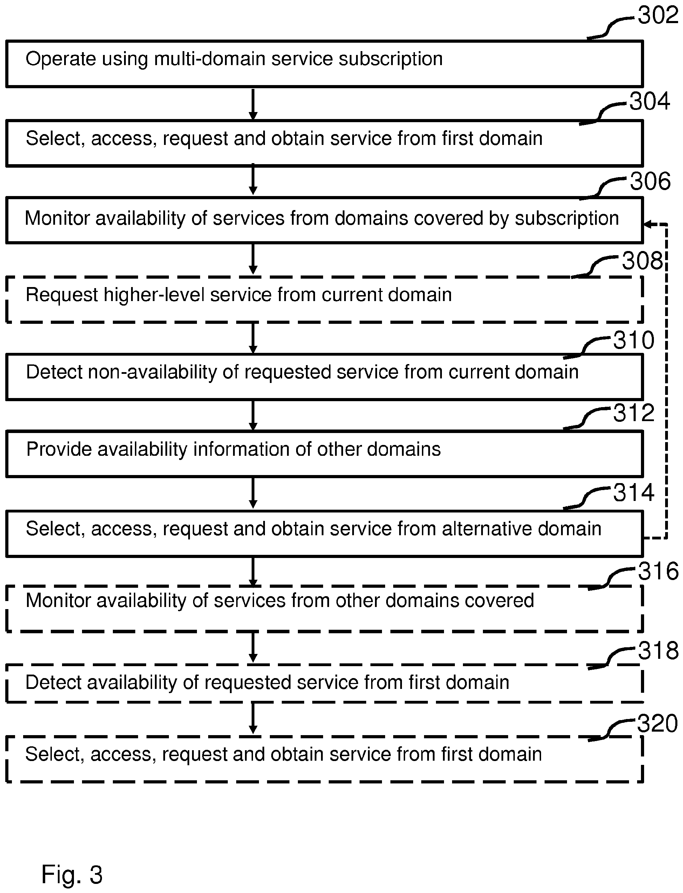

Fig. 3 is a flow diagram illustrating embodiments of a method for operating a radio device in accordance with the present invention.

The method is performed in the context of operating the radio device under a multi-domain service subscription enabling access to a requested radio network domain from a set of radio network domains (step 302).

In step 304, a first domain is selected and access to the first domain is requested and obtained, using respective subscription information from the multi-domain service subscription. In the following, access to the first domain is maintained while obtaining the requested radio network service from the first domain. As mentioned, access is always used to not more than one of the radio network domains at a given time.

While maintaining access to the first domain, availability information regarding the requested radio network service from the current first domain is determined by evaluation of information provided by the domains. Furthermore, second availability information regarding the requested radio network service from at least one second radio network domain of the set of radio network domains is obtained in a monitoring process (step 306).

At least upon determination that the first availability information indicates non-availability of the requested radio network service from the current first radio network domain (step 310), which in some instances may be caused on the basis of a request for higher-level services from the current domain (optional step 308), an availability output indicative at least of those second radio network domains with determined current availability of the requested radio network service is provided (step 312). This triggers a selection of a suitable second domain, followed by accessing that domain using the required subscriber identification information, and by a request for the desired radio network service from the selected second domain (step 314).

For the further process, there are different options. According to one embodiment, the process branches back to step 306 and monitors the availability of the requested services from all domains covered by the subscription, followed by steps 310 through 314.

In another embodiment, which provides the first domain as a default domain for the radio device, the availability of the other domains is monitored in step 316. Upon detection that the first domain is available for providing the currently requested service in step 318, the first domain is re-accessed in step 320.

The embodiments described above are particularly advantageous for M2M application devices, as will be further explained in the following. For many M2M application devices it is acceptable that traffic may be delayed. The domain-based concept described above provides embodiments that let M2M application device be allocated from a separate group within a default M2M domain (or a subgroup of that domain). In certain situations, such M2M application devices may be barred from access to other domains, until the application requires access to other domains because a currently required radio network service cannot be delivered by the M2M domain.

M2M application devices that allow delayed traffic are in some embodiments assigned to a default domain, which is the M2M domain. Such M2M application devices can be well distinguished from other M2M application devices. For those other M2M application devices, however, such transmission delay introduced by an assigned radio network domain may not be acceptable at all. And furthermore, there may be a group of M2M application devices having members, which sometimes accept that traffic services are delayed, but sometimes do not accept that, as decided by an application running on the M2M application device. In some embodiments, if an M2M application device maintaining access to the M2M domain receives a blocking indication, like getting no free resources of the M2M domain or a rejected M2M domain attach request due to specified reject causes for said domain and the desired QoS, the radio device of the M2M application device informs the connected application device about the currently blocked state. In response, the application device can instruct the radio device to switch domains so that communication can be activated again directly by switching to an appropriate domain. Although in that situation the M2M application device is not attached to its default domain, the M2M domain, its radio device will further monitor service availability information from all domains covered, and upon receiving the indication that the default domain has released or re-allowed access to the M2M domain for the M2M application device, the radio device of the M2M application device informs the application device of the M2M application device of this fact (via the control interface). The application is in the position to select and thus eventually reactivate the currently not used identity and return to the default M2M device identity belonging to a domain allowing delayed traffic service provided by the M2M domain.

Thus, the embodiments described allow a management of different levels of Quality of Service (QoS) and service classes that can be provided by different ones of the domains. To accomplish that, embodiments of the radio device provide the capability to use at least two different identities in the form of different subscriber identification information with respect to the network domains. These identities provide the ability to cope with different access allowances to the different levels of QoS provided by the different domains. For instance, specific domains allow and grant access for different QoS, for instance differentiation according to stationary devices, or degrees of mobility, and/ or traffic classes. A delayed realization of traffic may be thus form one traffic class especially for M2M application devices. On the other hand, real-time download or calls form another service class which can be supported for other application devices, including types of M2M application devices.

Furthermore, the provision of a radio network service may depend on a current network load. A certain domain or domain access may be blocked by the network. The above embodiments of the radio device are capable of changing from the current domain to another domain in order to always have access to a domain that is suitable for delivering the currently desired radio network service. If the currently requested (or planned) radio network service is not allowed or supported by the current domain, the radio device will change the domain. The selection is based on that the radio device monitors the domains covered by the multi-domain service subscription. Some of the monitored domains may provide radio network services according to a different technology and the related data throughputs and latency times, provided for example by a different cellular access technology (3G only, HSUPA, HSDPA, HSPA+, LTE, etc). Of course, in case of no current service requests or in case the intended service is fitting to the current domain, no domain change is required.

The identities provided by the multi-domain subscription and associated with access to different domains may be located in one physical entity. Only one of the identities is active at a time.

The enhanced multi-domain operation of some embodiments follows certain rules for monitoring other domains, such as at least one of the following:
- In case, the currently used domain is barred for the desired QoS, the radio device shall search for another domain.
- The application device, based on the traffic requirements of the running application, may require access to a domain that exclusively supports a certain technology, e.g. LTE.
- In case the current domain would in principle support the desired service but the monitoring of the domain by the radio device determines by measurements that the domain is currently very busy, an alternative domain allowing said traffic is selected and accessed, if available and being in a load condition allowing such traffic to be done in short time as required. To enable this, the monitoring includes radio measurements and technology comparison.
- In case the momentary service requirements are higher than provided by the current domain, instead FOTA can be used, for instance for the example case of updating firmware of a metering device. Normal service is sending small packets not too often (SMS), hence GSM/GPRS may be a good choice here. Doing an update a technology with higher throughput having an update done in shorter time and reducing interruption risks may be beneficial.
- If a domain only has one QoS level which is called non-realtime-traffic (service) without distinguishing between small and large data amounts the radio device shall combine that information of allowed service with radio measurements to find out whether another domain would be more suitable for such a service due to lower load.

## Claims

1. A radio device for requesting and receiving a radio network service from at least one cellular radio network, the cellular radio network comprising a first radio network domain and a second radio network domain,
the radio device comprising:
- a multi-domain subscription unit, which is configured to provide at its output respective subscription information enabling access to a requested radio network domain from a set of radio network domains defined by a multi-domain service subscription, wherein each radio network domain comprises a cellular network infrastructure with a plurality of network cells in the same geographical area;
- a multi-domain access-control unit, which is connected with the multi-domain subscription unit and configured to obtain the respective subscription information and to obtain access, using the respective subscription information, and maintain access to not more than one of the radio network domains at a given time, for requesting and receiving a requested radio network service;
- a multi-domain monitoring unit, which is configured
to determine, while access to a first one of the radio network domains is maintained, first availability information regarding the requested radio network service from the first radio network domain and second availability information regarding the requested radio network service from at least one second radio network domain of the set of radio network domains, and
provide at its output, at least upon determination that the first availability information indicates non-availability of the requested radio network service from the first radio network domain, an availability output indicative at least of those second radio network domains with determined current availability of the requested radio network service,
wherein the first radio network domain is reserved for machine-to-machine radio network services only.

2. The radio device of claim 1, wherein
- the multi-domain monitoring unit is configured to determine the availability information from a respective network domain in association with a respective quality of service level, hereinafter QoS level;
- the multi-domain access-control unit is configured to
determine a request QoS level associated with the requested radio network service; and wherein
- the multi-domain monitoring unit is configured
to generate from the second availability information, upon determination that the first availability information indicates non-availability of the requested radio network service from the first radio network domain, an output indicative of those second radio network domains with determined current availability of radio network services of the request QoS level or a QoS level higher than the request service-class.

3. The radio device of claim 1 or 2, wherein the multi-domain access-control unit is further configured to
by default obtain and maintain access to the first radio network domain,
while maintaining access to the second radio network domain, determine availability of the requested radio network service from the first radio network domain;
upon determination that the availability information indicates availability of the radio network services from the first radio network domain, re-access the first radio network domain.

4. The radio device of at least one of the preceding claims, wherein the subscription information comprises at least one subscription identifier and at least one subscriber identification information, wherein
- the multi-domain subscription unit is configured to maintain
- a one-to-one assignment between, on one hand, the radio network domains in the set of radio network domains defined by the multi-domain service subscription, and, on the other hand, respective subscription identifiers, and
- for each of the subscription identifiers, an allocation of respective subscriber identification information to be used for accessing the respective radio network domain, and wherein
- the number of different subscriber identification information is between, and including, one and the number of subscription identifiers.

5. The radio device of claim 4, wherein the multi-domain access control unit is configured to access the at least one memory in at least one subscriber identification device, which is communicatively connectable or connected to the radio device.

6. The radio device of at least one of the preceding claims,
- having a control interface for providing a communicative connection with an external application device, wherein
- the multi-domain monitoring unit is configured to provide, via the control interface, the first and second availability information as the availability output; and wherein
- the multi-domain access-control unit is configured
- to receive via the control interface:
a request for the radio network service; and
access-control information indicative of that second radio network domain selected for obtaining access to, for requesting the radio network service; and
- to obtain access to the selected second radio network domain upon receiving the access-control information.

7. The radio device of at least one of the claims 1 to 5, wherein
- the multi-domain monitoring unit is configured to provide the first and second availability information as the availability output to the multi-domain access-control unit, and wherein
- the multi-domain access-control unit is configured to select, in response to receiving the availability output, and obtain access to the selected one of the second radio network domains for serving the requested radio network service.

8. The radio device of at least one of the preceding claims, wherein the requested radio network service comprises time-critical service operations to be provided either without delay or with a determined maximum amount of delay in providing the time-critical service operations.

9. An application device for controlling operation of an external radio device, the external radio device being in accordance with claim 6 alone or in combination with at least one further of the preceding claims, and the application device comprising
- an application control interface for communicative connection of the external radio device via its control interface;
- an application unit configured to generate and communicate a request for a radio network service to the external radio device via the application control interface;
- a radio-service control unit, which is configured to receive from the radio device via the application control interface the availability output indicative of whether or not the requested radio network service is available from the first radio network domain, to which the radio device currently maintains access, and from at least one second radio network domain, to output via the application control interface to the external radio device access-control information indicative of the target network domain for providing the requested radio network service,
wherein the first radio network domain is reserved for machine-to-machine radio network services only.

10. A method for operating a radio device, comprising
- operating the radio device in a cellular network comprising a set of radio network domains, the radio device operating under a multi-domain service subscription enabling access to a requested radio network domain from the set of radio network domains, wherein each radio network domain comprises a cellular network infrastructure with a plurality of network cells in the same geographical area;
- obtaining access, using respective subscription information from the multi-domain service subscription, and maintaining access to not more than one of the radio network domains at a given time, for requesting and receiving a requested radio network service;
- determining, while access to a first one of the radio network domains is maintained, first availability information regarding the requested radio network service from the first radio network domain, and second availability information regarding the requested radio network service from at least one second radio network domain of the set of radio network domains, and
- at least upon determination that the first availability information indicates non-availability of the requested radio network service from the first radio network domain, providing an availability output indicative at least of those second radio network domains with determined current availability of the requested radio network service,
wherein the first radio network domain is reserved for machine-to-machine radio network services only.

11. The method of claim 10, further comprising
- by default obtaining and maintaining access to the first radio network domain,
while maintaining access to the second radio network domain, determining availability of the requested radio network service from the first radio network domain;
upon determination that the first availability information indicates availability of the radio network services from the first radio network domain, re-accessing the first radio network domain.

12. The method of claim 10 or 11, further comprising
- receiving, via a control interface, a request for the radio network service from an external application device;
- providing, via the control interface, the first and second availability information as the availability output to the external application device; and
- receiving, via the control interface, access-control information indicative of that second radio network domain selected for obtaining access to, for requesting the radio network service; and
- obtaining access to the selected second radio network domain upon receiving the access-control information.

13. The method of claim 10 or 11, further comprising:
- internally providing the first and second availability information as the availability output, and
- internally selecting, in response to receiving the availability output, and obtaining access to the selected one of the second radio network domains for serving the requested radio network service.

14. A computer-readable medium containing a set of instructions that causes a processor of a radio device to perform a method according to at least one of the claims 10 to 13.

## Patentansprüche

1. Funkvorrichtung zum Anfordern und Empfangen eines Funknetzwerkdienstes von wenigstens einem zellularen Funknetzwerk, wobei das zellulare Funknetzwerk eine erste Funknetzwerkdomäne und eine zweite Funknetzwerkdomäne umfasst,
wobei die Funkvorrichtung umfasst:
- eine Mehrdomänen-Subskriptionseinheit, die dafür ausgelegt ist, an ihrem Ausgang jeweilige Subskriptionsinformationen bereitzustellen, die den Zugriff auf eine angeforderte Funknetzwerkdomäne aus einer Gruppe von Funknetzwerkdomänen, die durch eine Mehrdomänen-Dienstsubskription definiert sind, ermöglicht, wobei jede Funknetzwerkdomäne eine zellulare Netzwerkinfrastruktur mit mehreren Netzwerkzellen in demselben geografischen Bereich umfasst;
- eine Mehrdomänen-Zugriffskontrolleinheit, die mit der Mehrdomänen-Subskriptionseinheit verbunden und dafür ausgelegt ist, die jeweiligen Subskriptionsinformationen zu gewinnen und, unter Verwendung der jeweiligen Subskriptionsinformationen, Zugriff zu erhalten und den Zugriff auf nicht mehr als eine der Funknetzwerkdomänen zu einem gegebenen Zeitpunkt aufrecht zu erhalten, um einen angeforderten Funknetzwerkdienst anzufordern und zu empfangen;
- eine Mehrdomänen-Überwachungseinheit, die ausgelegt ist zum
Bestimmen, während der Zugriff auf eine erste der Funknetzwerkdomänen aufrechterhalten wird, einer ersten Verfügbarkeitsinformation bezüglich des angeforderten Funknetzwerkdienstes von der ersten Funknetzwerkdomäne und einer zweiten Verfügbarkeitsinformation bezüglich des zweiten Funknetzwerkdienstes von wenigstens einer zweiten Funknetzwerkdomäne der Gruppe von Funknetzwerkdomänen, und
Bereitstellen, an ihrem Ausgang, wenigstens auf die Bestimmung hin, dass die erste Verfügbarkeitsinformation eine Nichtverfügbarkeit des angeforderten Funknetzwerkdienstes von der ersten Funknetzwerkdomäne anzeigt, einer Verfügbarkeitsausgabe, die wenigstens diejenigen zweiten Funknetzwerkdomänen mit bestimmter aktueller Verfügbarkeit des angeforderten Funknetzwerkdienstes angibt,
wobei die erste Funknetzwerkdomäne ausschließlich für Maschine-zu-Maschine-Funknetzwerkdienste reserviert ist.

2. Funkvorrichtung nach Anspruch 1, wobei
- die Mehrdomänen-Überwachungseinheit dafür ausgelegt ist, die Verfügbarkeitsinformationen von einer jeweiligen Netzwerkdomäne in Verbindung mit einem jeweiligen Dienstgüte-Niveau, im Folgenden QoS (Quality of Service)-Niveau, zu bestimmen;
- die Mehrdomänen-Zugriffskontrolleinheit dafür ausgelegt ist,
ein QoS-Niveau einer Anforderung zu bestimmen, das mit dem angeforderten Funknetzwerkdienst verknüpft ist; und wobei
- die Mehrdomänen-Überwachungseinheit dafür ausgelegt ist,
anhand der zweiten Verfügbarkeitsinformation, auf die Bestimmung hin, dass die erste Verfügbarkeitsinformation eine Nichtverfügbarkeit des angeforderten Funknetzwerkdienstes von der ersten Funknetzwerkdomäne anzeigt, eine Ausgabe zu erzeugen, die diejenigen zweiten Funknetzwerkdomänen mit bestimmter aktueller Verfügbarkeit von Funknetzwerkdiensten des QoS-Niveaus der Anforderung oder eines höheren QoS-Niveaus als der Dienstgüteklasse der Anforderung angibt.

3. Funkvorrichtung nach Anspruch 1 oder 2, wobei die Mehrdomänen-Zugriffskontrolleinheit ferner dafür ausgelegt ist,
standardmäßig einen Zugriff auf die erste Funknetzwerkdomäne zu erhalten und aufrecht zu erhalten,
während der Zugriff auf die zweite Funknetzwerkdomäne aufrechterhalten wird, eine Verfügbarkeit des angeforderten Funknetzwerkdienstes von der ersten Funknetzwerkdomäne zu bestimmen;
auf die Bestimmung hin, dass die Verfügbarkeitsinformationen eine Verfügbarkeit von Funknetzwerkdiensten von der ersten Funknetzwerkdomäne anzeigen, erneut auf die erste Funknetzwerkdomäne zuzugreifen.

4. Funkvorrichtung nach wenigstens einem der vorhergehenden Ansprüche, wobei die Subskriptionsinformationen wenigstens eine Subskriptionskennung und wenigstens eine Teilnehmeridentifikationsinformation umfassen, wobei
- die Mehrdomänen-Subskriptionseinheit ausgelegt ist zum Aufrechterhalten
- einer Eins-zu-eins-Zuweisung zwischen den Funknetzwerkdomänen in der Gruppe von Funknetzwerkdomänen, die durch die Mehrdomänen-Dienstsubskription definiert sind, einerseits und jeweiligen Subskriptionskennungen andererseits, und
- für jede der Subskriptionskennungen, einer Zuordnung jeweiliger Teilnehmeridentifikationsinformationen, die für den Zugriff auf die jeweilige Funknetzwerkdomäne zu verwenden sind, und wobei
- die Anzahl verschiedener Teilnehmeridentifikationsinformationen zwischen einschließlich eins und der Anzahl der Subskriptionskennungen liegt.

5. Funkvorrichtung nach Anspruch 4, wobei die Mehrdomänen-Zugriffskontrolleinheit dafür ausgelegt ist, auf den wenigstens einen Speicher in wenigstens einer Teilnehmeridentifikationsvorrichtung zuzugreifen, der kommunikationsfähig mit der Funkvorrichtung verbindbar oder verbunden ist.

6. Funkvorrichtung nach wenigstens einem der vorhergehenden Ansprüche,
- eine Steuerungsschnittstelle aufweisend, um eine kommunikationsfähige Verbindung zu einer externen Anwendungsvorrichtung bereitzustellen, wobei
- die Mehrdomänen-Überwachungseinheit dafür ausgelegt ist, über die Steuerungsschnittstelle die erste und die zweite Verfügbarkeitsinformation als Verfügbarkeitsausgabe bereitzustellen; und wobei
- die Mehrdomänen-Zugriffskontrolleinheit dafür ausgelegt ist,
- über die Steuerungsschnittstelle zu empfangen:
eine Anforderung des Funknetzwerkdienstes; und
Zugangskontrollinformationen, die für diejenige zweite Funknetzwerkdomäne indikativ sind, die zum Erhalten von Zugriff ausgewählt wurde, zum Anfordern des Funknetzwerkdienstes; und
- Zugriff auf die ausgewählte zweite Funknetzwerkdomäne zu erhalten, nachdem die Zugangskontrollinformationen empfangen wurden.

7. Funkvorrichtung nach wenigstens einem der Ansprüche 1 bis 5, wobei
- die Mehrdomänen-Überwachungseinheit dafür ausgelegt ist, die erste und die zweite Verfügbarkeitsinformation als Verfügbarkeitsausgabe an die Mehrdomänen-Zugriffskontrolleinheit bereitzustellen, und wobei
- die Mehrdomänen-Zugriffskontrolleinheit dafür ausgelegt ist, in Reaktion auf das Empfangen der Verfügbarkeitsausgabe, eine der zweiten Funknetzwerkdomänen auszuwählen und Zugriff auf die ausgewählte Funknetzwerkdomäne zu erhalten, um den angeforderten Funknetzwerkdienst bereitzustellen.

8. Funkvorrichtung nach wenigstens einem der vorhergehenden Ansprüche, wobei der angeforderte Funknetzwerkdienst zeitkritische Dienstoperationen umfasst, die entweder ohne Verzögerung oder mit einer bestimmten maximalen Verzögerung bei der Bereitstellung der zeitkritischen Dienstoperationen bereitgestellt werden sollen.

9. Anwendungsvorrichtung zum Steuern des Betriebs einer externen Funkvorrichtung, wobei die externe Funkvorrichtung mit Anspruch 6 allein oder in Kombination mit wenigstens einem weiteren der vorhergehenden Ansprüche übereinstimmt, und wobei die Anwendungsvorrichtung umfasst:
- eine Anwendungssteuerungsschnittstelle zur kommunikationsfähigen Verbindung mit einer externen Funkvorrichtung über ihre Steuerungsschnittstelle;
- eine Anwendungseinheit, die dafür ausgelegt ist, eine Anforderung eines Funknetzwerkdienstes zu erzeugen und über die Anwendungssteuerungsschnittstelle an die Funkvorrichtung zu übermitteln;
- eine Funkdienst-Steuerungseinheit, die dafür ausgelegt ist, von der Funkvorrichtung über die Anwendungssteuerungsschnittstelle die Verfügbarkeitsausgabe zu empfangen, die angibt, ob der angeforderte Funknetzwerkdienst von der ersten Funknetzwerkdomäne, auf die die Funkvorrichtung aktuell den Zugriff aufrecht erhält, und von wenigstens einer zweiten Funknetzwerkdomäne verfügbar ist oder nicht, um über die Anwendungssteuerungsschnittstelle an die externe Funkvorrichtung Zugangskontrollinformationen auszugeben, die für die Ziel-Netzwerkdomäne indikativ sind, um den angeforderten Funknetzwerkdienst bereitzustellen,
wobei die erste Funknetzwerkdomäne ausschließlich für Maschine-zu-Maschine-Funknetzwerkdienste reserviert ist.

10. Verfahren zum Betrieb einer Funkvorrichtung, umfassend:
- Betreiben der Funkvorrichtung in einem zellularen Netzwerk, das eine Gruppe von Funknetzwerkdomänen umfasst, wobei die Funkvorrichtung unter einer Mehrdomänen-Dienstsubskription betrieben wird, um den Zugriff auf eine angeforderte Funknetzwerkdomäne aus der Gruppe von Funknetzwerkdomänen zu ermöglichen, wobei jede Funknetzwerkdomäne eine zellulare Netzwerkinfrastruktur mit mehreren Netzwerkzellen in demselben geografischen Bereich umfasst;
- Erhalten von Zugriff unter Verwendung der jeweiligen Subskriptionsinformationen von der Mehrdomänen-Dienstsubskription, und Aufrechterhalten des Zugriffs auf nicht mehr als eine der Funknetzwerkdomänen zu einem gegebenen Zeitpunkt, um einen Funknetzwerkdienst anzufordern und den angeforderten Dienst zu empfangen;
- Bestimmen, während der Zugriff auf eine erste der Funknetzwerkdomänen aufrechterhalten wird, einer ersten Verfügbarkeitsinformation bezüglich des angeforderten Funknetzwerkdienstes von der ersten Funknetzwerkdomäne und einer zweiten Verfügbarkeitsinformation bezüglich des zweiten Funknetzwerkdienstes von wenigstens einer zweiten Funknetzwerkdomäne der Gruppe von Funknetzwerkdomänen, und
- wenigstens auf die Bestimmung hin, dass die erste Verfügbarkeitsinformation eine Nichtverfügbarkeit des angeforderten Funknetzwerkdienstes von der ersten Funknetzwerkdomäne anzeigt, Bereitstellen einer Verfügbarkeitsausgabe, die wenigstens diejenigen zweiten Funknetzwerkdomänen mit bestimmter aktueller Verfügbarkeit des angeforderten Funknetzwerkdienstes angibt,
wobei die erste Funknetzwerkdomäne ausschließlich für Maschine-zu-Maschine-Funknetzwerkdienste reserviert ist.

11. Verfahren nach Anspruch 10, ferner umfassend:
- standardmäßig Erhalten und Aufrechterhalten des Zugriffs auf die erste Funknetzwerkdomäne,
während der Zugriff auf die zweite Funknetzwerkdomäne aufrechterhalten wird, Bestimmen einer Verfügbarkeit des angeforderten Funknetzwerkdienstes von der ersten Funknetzwerkdomäne;
auf die Bestimmung hin, dass die erste Verfügbarkeitsinformation eine Verfügbarkeit von Funknetzwerkdiensten von der ersten Funknetzwerkdomäne anzeigt, erneutes Zugreifen auf die erste Funknetzwerkdomäne.

12. Verfahren nach Anspruch 10 oder 11, ferner umfassend:
- Empfangen, über eine Steuerungsschnittstelle, einer Anforderung des Funknetzwerkdienstes von einer externen Anwendungsvorrichtung;
- Bereitstellen, über die Steuerungsschnittstelle, der ersten und der zweiten Verfügbarkeitsinformation als Verfügbarkeitsausgabe an die externe Anwendungsvorrichtung; und
- Empfangen, über die Steuerungsschnittstelle, von Zugangskontrollinformationen, die für diejenige zweite Funknetzwerkdomäne indikativ sind, die zum Erhalten von Zugriff ausgewählt wurde, zum Anfordern des Funknetzwerkdienstes; und
- Erhalten von Zugriff auf die ausgewählte zweite Funknetzwerkdomäne, nachdem die Zugangskontrollinformationen empfangen wurden.

13. Verfahren nach Anspruch 10 oder 11, ferner umfassend:
- internes Bereitstellen der ersten und der zweiten Verfügbarkeitsinformation als Verfügbarkeitsausgabe, und
- internes Auswählen, in Reaktion auf das Empfangen der Verfügbarkeitsausgabe, einer der zweiten Funknetzwerkdomänen und Erhalten von Zugriff auf die ausgewählte Funknetzwerkdomäne, um den angeforderten Funknetzwerkdienst bereitzustellen.

14. Computerlesbares Medium, das einen Satz von Befehlen enthält, der bewirkt, dass ein Prozessor einer Funkvorrichtung ein Verfahren nach wenigstens einem der Ansprüche 10 bis 13 ausführt.

## Revendications

1. Dispositif radio servant à demander et à recevoir un service de réseau radio provenant d'au moins un réseau radio cellulaire, ce réseau radio cellulaire comprenant un premier domaine de réseau radio et un second domaine de réseau radio,
le dispositif radio comprenant :
- une unité d'abonnement multi-domaine configurée pour fournir, à sa sortie, des informations d'abonnement respectives permettant d'accéder à un domaine de réseau radio demandé à partir d'un ensemble de domaines de réseau radio défini par un abonnement de service multi-domaine, dans lequel chaque domaine de réseau radio comprend une infrastructure de réseaux cellulaires avec une pluralité de cellules de réseau dans la même zone géographique ;
- une unité de contrôle d'accès multi-domaine connectée à l'unité d'abonnement multi-domaine et configurée pour obtenir les informations d'abonnement respectives et pour obtenir l'accès, au moyen des informations d'abonnement respectives, et maintenir l'accès à un seul des domaines de réseau radio à un moment donné, en vue de demander et de recevoir un service de réseau radio demandé ;
- une unité de surveillance multi-domaine configurée
pour déterminer, pendant que l'accès à un premier des domaines de réseau radio est maintenu, des premières données de disponibilité relatives au service de réseau radio demandé à partir du premier domaine de réseau radio, et des deuxièmes données de disponibilité relatives au service de réseau radio demandé à partir d'au moins un deuxième domaine de réseau radio de l'ensemble des domaines de réseau radio, et
pour fournir, à sa sortie, au moins lorsqu'il est déterminé que les premières données de disponibilité indiquent que le service de réseau radio demandé n'est pas disponible à partir du premier domaine de réseau radio, un résultat de disponibilité indiquant au moins les deuxièmes domaines de réseau radio avec la disponibilité actuelle déterminée pour le réseau radio demandé,
le premier domaine de réseau radio étant réservé uniquement à des services de réseau radio « Machine-to-Machine ».

2. Dispositif radio selon la revendication 1, dans lequel
- l'unité de surveillance multi-domaine est configurée pour déterminer les données de disponibilité à partir d'un domaine de réseau respectif en association avec un niveau de qualité de service respectif, ci-après désigné niveau QoS ;
- l'unité de contrôle d'accès multi-domaine est configurée pour
déterminer un niveau QoS de la demande associé au service de réseau radio demandé ; et dans lequel
- l'unité de surveillance multi-domaine est configurée
pour générer à partir des deuxièmes données de disponibilité, lorsqu'il est déterminé que les premières données de disponibilité indiquent que le service de réseau radio demandé n'est pas disponible à partir du premier domaine de réseau radio, une sortie indiquant les deuxièmes domaines de réseau radio avec une disponibilité actuelle déterminée des services de réseau radio présentant le niveau QoS de la demande ou un niveau QoS supérieur à celui de la classe de service de la demande.

3. Dispositif radio selon la revendication 1 ou 2, dans lequel l'unité de contrôle d'accès multi-domaine est en outre configurée pour
par défaut, obtenir et conserver l'accès au premier domaine de réseau radio,
tout en conservant l'accès au deuxième domaine de réseau radio, déterminer la disponibilité du service de réseau radio demandé à partir du premier domaine de réseau radio ;
lorsqu'il est déterminé que les données de disponibilité indiquent que les services de réseau radio sont disponibles à partir du premier domaine de réseau radio, ré-accéder au premier domaine de réseau radio.

4. Dispositif radio selon au moins l'une des revendications précédentes, dans lequel les informations d'abonnement comprennent au moins un identifiant d'abonnement et au moins une information d'identification d'abonnés, dans lequel
- l'unité d'abonnement multi-domaine est configurée pour conserver
- une attribution individuelle entre, d'un côté, les domaines de réseau radio dans l'ensemble de domaines de réseau radio définis par l'abonnement de service multi-domaine et, d'un autre côté, des identifiants d'abonnement respectifs, et
- pour chacun des identifiants d'abonnement, une affectation des informations d'identification d'abonnés respectives à utiliser pour accéder au domaine de réseau radio respectif, et dans lequel
- le nombre d'informations d'identification d'abonnés différentes se situe entre un et le nombre d'identifiants d'abonnement.

5. Dispositif radio selon la revendication 4, dans lequel l'unité de contrôle d'accès multi-domaine est configurée pour accéder à au moins une mémoire dans au moins un dispositif d'identification d'abonnés, qui peut être connecté de manière à établir une communication ou qui est connecté au dispositif radio.

6. Dispositif radio selon au moins l'une des revendications précédentes,
- doté d'une interface de contrôle permettant d'assurer une connexion de communication avec un dispositif d'application externe, dans lequel
- l'unité de surveillance multi-domaine est configurée pour fournir, via l'interface de contrôle, les premières et deuxièmes données de disponibilité à travers le résultat de disponibilité ; et dans lequel
- l'unité de contrôle d'accès multi-domaine est configurée
- pour recevoir via l'interface de contrôle :
une demande de service de réseau radio ; et
des informations de contrôle d'accès indicatives du deuxième domaine de réseau radio sélectionné pour obtenir l'accès, en vue de demander le service de réseau radio ; et
- pour obtenir l'accès au deuxième domaine de réseau radio sélectionné à réception des informations de contrôle d'accès.

7. Dispositif radio selon au moins une des revendications 1 à 5, dans lequel
- l'unité de surveillance multi-domaine est configurée pour fournir les premières et deuxièmes données de disponibilité à travers le résultat de disponibilité envoyé à l'unité de contrôle d'accès multi-domaine, et dans lequel
- l'unité de contrôle d'accès multi-domaine est configurée pour, en réponse à la réception du résultat de disponibilité, sélectionner et obtenir l'accès au domaine sélectionné parmi les deuxièmes domaines de réseau radio en vue de fournir le service de réseau radio demandé.

8. Dispositif radio selon au moins l'une des revendications précédentes, dans lequel le service de réseau radio demandé comprend des opérations de service sensibles au facteur temps à fournir soit sans délai, soit avec un délai maximum déterminé pour la fourniture des opérations de service sensibles au facteur temps.

9. Dispositif d'application servant à commander le fonctionnement d'un dispositif radio externe, ce dispositif radio externe étant conforme à la revendication 6 seule ou en combinaison avec au moins une autre des revendications précédentes, et le dispositif d'application comprenant
- une interface de contrôle d'application pour une connexion de communication du dispositif radio externe via son interface de contrôle ;
- une unité d'application configurée pour générer et communiquer une demande de service de réseau radio au dispositif radio externe via l'interface de contrôle d'application ;
- une unité de contrôle de service radio configurée pour recevoir du dispositif radio via l'interface de contrôle d'application le résultat de disponibilité qui indique si le service de réseau radio demandé est disponible ou non depuis le premier domaine de réseau radio auquel le dispositif radio conserve actuellement l'accès, et depuis au moins un deuxième domaine de réseau radio, pour envoyer vers le dispositif de radio externe, via l'interface de contrôle d'application, des informations de contrôle d'accès indicatives du domaine de réseau ciblé pour fournir le service de réseau radio demandé,
le premier domaine de réseau radio étant réservé uniquement à des services de réseau radio « Machine-to-Machine ».

10. Procédé d'exploitation d'un dispositif radio comprenant
- l'exploitation du dispositif radio dans un réseau cellulaire comprenant un ensemble de domaines de réseau radio, le dispositif radio fonctionnant dans le cadre d'un abonnement de service multi-domaine qui permet d'accéder à un domaine de réseau radio demandé parmi l'ensemble de domaines de réseau radio, dans lequel chaque domaine de réseau radio comprend une infrastructure de réseaux cellulaires avec une pluralité de cellules de réseau dans la même zone géographique ;
- l'obtention d'un accès, au moyen des informations d'abonnement respectives provenant de l'abonnement de service multi-domaine, et la conservation de l'accès à un seul des domaines de réseau radio à un moment donné, en vue de demander et de recevoir un service de réseau radio demandé ;
- la détermination, pendant que l'accès à un premier des domaines de réseau radio est maintenu, des premières données de disponibilité relatives au service de réseau radio demandé à partir du premier domaine de réseau radio, et des deuxièmes données de disponibilité relatives au service de réseau radio demandé à partir d'au moins un deuxième domaine de réseau radio de l'ensemble des domaines de réseau radio, et
- au moins lorsqu'il est déterminé que les premières données de disponibilité indiquent que le service de réseau radio demandé n'est pas disponible à partir du premier domaine de réseau radio, la fourniture d'un résultat de disponibilité indiquant au moins les deuxièmes domaines de réseau radio avec la disponibilité actuelle déterminée pour le service de réseau radio demandé,
le premier domaine de réseau radio étant réservé uniquement à des services de réseau radio « Machine-to-Machine ».

11. Procédé selon la revendication 10, comprenant en outre :
par défaut, l'obtention et la conservation d'un accès au premier domaine de réseau radio,
tout en maintenant un accès au deuxième domaine de réseau radio, la détermination de la disponibilité du service de réseau radio demandé à partir du premier domaine de réseau radio ;
lorsqu'il est déterminé que les premières données de disponibilité indiquent que les services de réseau radio sont disponibles à partir du premier domaine de réseau radio, un nouvel accès au premier domaine de réseau radio.

12. Procédé selon la revendication 10 ou 11, comprenant en outre :
- la réception, via une interface de contrôle, d'une demande de service de réseau radio provenant d'un dispositif d'application externe ;
- la fourniture, via l'interface de contrôle, des premières et deuxièmes données de disponibilité à travers le résultat de disponibilité envoyé au dispositif d'application externe ; et
- la réception, via l'interface de contrôle, des informations de contrôle d'accès indicatives du deuxième domaine de réseau radio sélectionné pour obtenir l'accès, en vue de demander le service de réseau radio ; et
- l'obtention de l'accès au deuxième domaine de réseau radio sélectionné à réception des informations de contrôle d'accès.

13. Procédé selon la revendication 10 ou 11, comprenant en outre :
- la fourniture en interne des premières et deuxièmes données de disponibilité à travers le résultat de disponibilité, et
- en réponse à la réception du résultat de disponibilité, la sélection en interne et l'obtention de l'accès au domaine sélectionné parmi les deuxièmes domaines de réseau radio en vue de fournir le service de réseau radio demandé.

14. Support lisible par ordinateur contenant un ensemble d'instructions qui ordonne à un processeur d'un dispositif radio d'exécuter un procédé conforme à au moins l'une des revendications 10 à 13.
